# EUROPEAN PATENT APPLICATION

(11) **EP 2 727 447 A1**
(43) Date of publication of application: **07.05.2014**
(21) Application number: 13191098.6
(22) Date of filing: 31.10.2013
(51) Int. Cl.: A01B 33/14

(54) **Cutting group for a rotary hoeing machine**

(30) Priority: 31.10.2012 IT PD20120324
(71) Applicant: Valentini Antonio S.r.l., 35012 Camposampiero (PD) (IT)
(72) Inventor: Valentini, Antonio, I-35012 Camposampiero (PD) (IT)
(74) Representative: Gallo, Luca

(57) **Abstract**

The present finding concerns a cutting group for a rotary hoeing machine, which comprises a fixed flange (3) able to be rigidly centrally fixed to the rotary driven shaft (2) of a rotary hoeing machine and one or more hoes (7) which can be rigidly fixed to the fixed flange (3) through removable holding means (10). The aforementioned fixed flange (3) is perimetrically provided with a plurality of first through holes (4) able to align with second through holes (5) foreseen in each hoe (7). The removable holding means (10) comprise an annular plate (11) provided with a plurality of projecting pins (12) able to insert in the aforementioned first and second holes (4, 5) aligned to fixedly connect the hoes to the fixed flange (3). The removable holding means (10) also comprise a bushing (15) fixedly attached to the shaft (2) and provided with external threading, and a fastening bush (16) provided with internal threading with the purpose of engaging by screwing onto the external threading of the bushing (15) going into abutment on the annular plate (3) to compress the hoes (7) against the fixed flange (3).

## Description

The present invention concerns a cutting group for a rotary hoeing machine, according to the preamble of the main claim.

The cutting group according to the present invention is intended to be used on a rotary hoeing machine in the field of agriculture for working soil.

As it is known, rotary hoeing machines generally comprise a support frame, which is towed on the soil to be worked by a tractor, and supports, between two lateral sides, a rotary shaft on which a plurality of cutting groups are mounted in succession at a regular distance that, when rotating, break up and mix the surface layers of the soil.

More in detail, the rotary shaft receives the torque for its rotation from a power take-off of the tractor through suitable transmission means. Each cutting group (either blade-bearing or hoe-bearing group) is provided with a disc-shaped flange, which is fixed to the tubular-shaped rotary shaft and peripherally supports a plurality of shaped hoes (or blades), which according to the models and to the specific requirements can be in a variable number generally from two to six.

The cutting groups, by rotating at high speed, when moving forward along the ground cause the erosion of a layer of soil breaking it up into clods that are mixed and stratified straight behind the hoeing machine.

The frame, in the rear part, supports a carter that has the purpose of preventing the clods lifted by the hoes from being hurled away, ensuring that they stratify straight after the cutting groups have passed.

As it is known, the hoes are mounted in a removable manner on the flanges of the cutting groups to allow normal maintenance and/or replacement operations to be carried out.

In the field of reference it has long been desired for a cutting group to be devised that makes it possible to obtain a system for mounting hoes that is both rapid and safe.

Indeed, due to the numerous stresses that hoes undergo during normal operation, it is, on one hand, necessary to provide a system for mechanically fixing the hoes to the flanges of the cutting groups, which is particularly rigid and strong, and on the other hand, due to the rapid wearing the hoes undergo during operation, it is necessary for fixing means to be provided that indeed make it possible to carry out normal maintenance and/or replacement operations in a practical and fast manner.

In the majority of known solutions on the market today, the connection of the hoes to the flanges of the cutting groups, occurs through the use of many screws and/or pins, or rather usually through the use of two screws to be locked in aligned holes obtained on the flange and on the hoe. These fixing means have been found to be impractical when used since they require operations that are quite long and laborious for normal maintenance of the hoes due to the numerous screwing and unscrewing operations that are necessary to carry out in order to assemble and disassemble all the single hoes of each rotary cutter.

It should be noted that on the tubular shaft of a hoeing machine numerous cutting groups are usually mounted in succession, for example 10-12 cutting groups or more, each of which supports, as mentioned, usually 2-6 hoes, and consequently it is foreseen for there to be a total of 40-80 hoes which also require hundreds of screwing and unscrewing operations of the screws for the complete replacement of all the hoes in a rotary hoeing machine.

A further drawback of the fixing means of the known type lies in the fact that the maintenance technician must often manipulate numerous elements necessary for the mechanical connection of the hoes, such as screws, nuts, clamps etc. which risk being lost especially if considering that the aforementioned maintenance operations must often be carried out in the field or rather in environments that are not fully equipped. Concerning this, patent DE 849930 describes a hoeing machine comprising a plurality of hoes mounted on the rotary shaft through spacers, which are mounted in succession and held together and fixed to the shaft by means of a single long screw that is suitable for being engaged through screwing into a threaded hole obtained in the rotary shaft. Each of the spacers is provided with a support flange for the hoes, which are connected to such a flange through a plurality of pins.

The main drawback of the hoeing machine described in patent DE 849930 consists of the fact that maintenance of its hoes requires long and laborious operations.

Indeed, in order to remove and possibly replace a single hoe it is necessary, in addition to removing the pins that connect such a hoe to the flange of the corresponding spacer, to remove the screw that holds all the spacers together so that the latter, at the end of the maintenance operations, must be remounted in sequence and fixed to the shaft by means of the screw.

In order to avoid these drawbacks more recently some improved solutions have been devised, for example described in patents: EP 1 222 844, WO 98/51141, FR 2330295, US 2,802,408, EP 2156722.

These cutting groups of the known type, although in general improving the replacement time of the hoes, are mechanically complex to make and involve high production costs.

The main purpose of the present finding is therefore that of eliminating the drawbacks of the solution of the known type mentioned above, by providing a cutting group for a rotary hoeing machine, which is provided with a mechanical connection for the hoes that is at the same time extremely safe, practical and quick so as to allow maintenance and replacement operations on the hoes themselves to be carried out simply and frequently.

A further purpose of the present finding is that of providing a cutting group for a rotary hoeing machine that is cost-effective and operatively completely reliable.

Another purpose of the present finding is that of providing a cutting group for a rotary hoeing machine that can also be installed on the shafts of already existing machines.

### Brief description of the drawings

These purposes and others, are all achieved with the cutting group for a rotary hoeing machine object of the finding, the technical characteristics of which can be clearly found in the content of the claims below and the advantages thereof shall become clearer from the following detailed description, made with reference to the attached drawings, which represent two embodiments that are purely non limiting examples, in which:
**FIG. 1** shows a perspective view of a first example of a cutting group with six hoes object of the present invention mounted on a shaft of a load-bearing hoeing machine;
**FIG. 2** shows a side view of the cutting group object of the present invention of figure 1;
**FIG. 3** shows a front view of the cutting group object of the present invention of figure 1;
**FIG. 4** shows a section view of the cutting group object of the present invention made along the line III-III of figure 3;
**FIG. 5** shows an exploded view of the cutting group object of the present invention of figure 1;
**FIG. 6** shows a perspective view of a second example of the cutting group with six hoes object of the present invention mounted on a shaft of a load-bearing hoeing machine;
**FIG. 7** shows a side view of the cutting group object of the present invention of figure 6;
**FIG. 8** shows a front view of the cutting group object of the present invention of figure 6;
**FIG. 9** shows a section view of the cutting group object of the present invention made along the line VIII-VIII of figure 8;
**FIG. 10** shows an exploded view of the cutting group object of the present invention of figure 6;
**FIG. 11** shows an exploded view of a third example of the cutting group object of the present invention.

### Detailed description of a preferred embodiment

With reference to the attached drawings reference numeral 1 wholly indicates a cutting group intended to be mounted in series with others on a shaft 2 of a rotary hoeing machine.

More in detail, the rotary hoeing machine comprises, in a *per se* completely conventional manner, a support frame intended to be towed on the soil to be worked by a tractor.

The frame is provided with two lateral sides between which a tubular-shaped rotary driven shaft 2 is rotatably mounted, which receives its movement by a power take-off of the tractor through transmission means. The latter comprise for example a drive shaft that is connected to the driven shaft 2 through gears or belts that are arranged on one side of the frame.

The cutting groups 1, which are for example in a variable number between 10 and 20 according to the model of hoeing machine used, are fixed centrally one after the other and at a regular distance to the aforementioned driven shaft 2. The cutting groups 1, due to their rotation and following the advancing of the hoeing machine, break up and mix the surface layers of the soil.

More in detail, each cutting group 1 comprises a fixed flange 3 that is preferably made up of a disc-shaped metal plate, which is rigidly centrally fixed to the driven shaft 2 of the rotary hoeing machine, for example through welding.

On one face of the fixed flange 3, a plurality of hoes 7 are housed, which are for example in a variable number between 2 and 6, each of which consists of a shaped metal plate, which is usually L-shaped.

Of course, without for this reason departing from the scope of protection of the present patent document, the hoeing machine 1 may foresee the use of any number of cutting groups 1, each provided with between 2 and 6 hoes 7 (blades or similar rotating tools) having the most suitable conformation for the work applications for which the machine 1 is intended.

Each hoe 7 is provided with a work portion 7' for treating the soil, which ends with a first free end 8, and with a fastening portion 7" forming a single body with the work portion 7' and extending with continuity to a second end 9 positioned at the fixed flange 3 to which it is engaged as made clearer in the rest of the description.

Advantageously, a blade 70 that is suitable for working the soil first, is arranged on the work portion 7'.

The fastening portion 7" of the hoe 7 can be rigidly fixed to the fixed flange 3 through removable holding means 10.

The latter make it possible to mechanically couple each hoe 7 in a removable manner to the fixed flange of the cutting group 1 (or blade-bearing group) for allowing its necessary replacement or maintenance operations.

The fixed flange 3 is perimetrically provided with a plurality of first through holes 4. The latter are preferably perimetrically closed and have a circular shape and in any case can also be of the type that are radially open towards one side of the hoe and/or have a polygonal shape.

The aforementioned first holes 4 are preferably evenly spaced from one another along the circumference of the fixed flange 3. Otherwise, they can be organised, for example, in groups of two first holes 4, suitable for being aligned with a pair of second holes obtained on the hoes 7 as explained in the rest of the description.

In accordance with the embodiments illustrated in the attached drawings, twelve first through holes 4 having a circular shape and that are equally spaced from one another along a circular trajectory that is centred on the axis of the shaft 2 are advantageously foreseen peripherally on the fixed flange 3.

In turn the hoes 7 are each provided with at least one second through hole 5 that is able to be aligned with a corresponding first hole 4 of the fixed flange 3. The aforementioned second through hole 5 is for this purpose foreseen near to the second end 9 of the fastening portion 7" of the hoe 7. Advantageously, each hoe 7 is provided with two second holes 5 that are intended to be aligned with two corresponding first holes 4 of the fixed flange 3 as illustrated in the attached drawings.

According to the idea forming the basis of the present invention, the removable holding means 10, previously mentioned for fixing the hoes 7 to the fixed flange 3, comprise at least one annular plate 11 having a first face 12 facing towards the hoes 7 and a second face 13 that is oriented in the opposite direction with respect to the first. Such a first face 12 of the annular plate 11 bears a plurality of fixed projecting pins 14, that are suitable for being inserted in the first and in the second holes 4, 5 aligned to fixedly connect the hoes 7 to the fixed flange 3.

Constructively, the projecting pins 14 are fixed, in particular by compression, in third holes 6 that are obtained in the annular plate 11.

Advantageously, in accordance with a preferred embodiment of the present invention, the aforementioned annular plate 11 is obtained with many distinct arched portions 11' each provided with one or more pins 14.

Preferably, the pins 14 of each arched portion 11' of the annular plate 11 engage the second holes 5 of two contiguous hoes 7. Since, according to the preferred embodiment illustrated in the attached drawings, each hoe 7 is provided with two second holes 5 and each cutting group 1 is made up of six hoes 7, consequently 3 arched portions 11' are foreseen, each with an extension of 120 degrees and engaging two contiguous hoes 7 with its four pins 14.

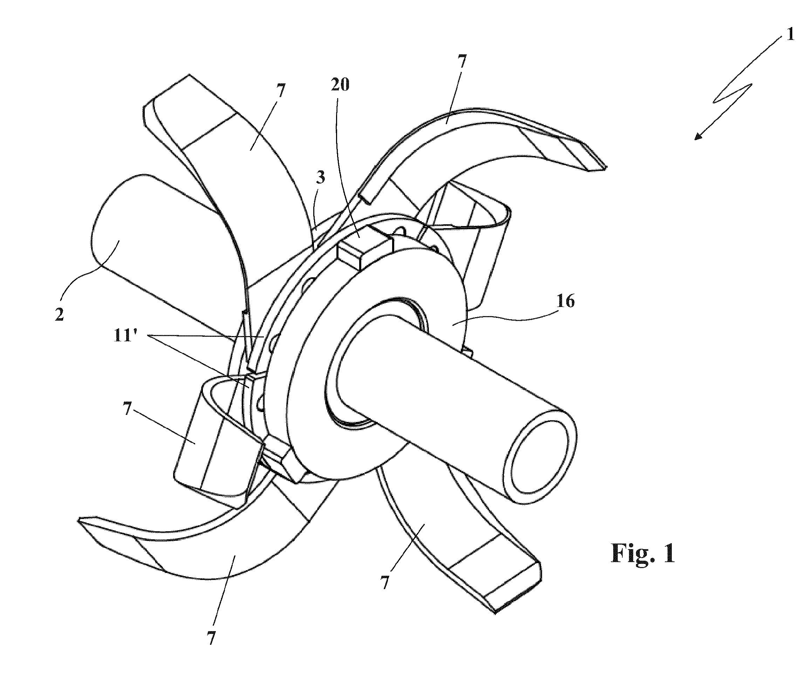

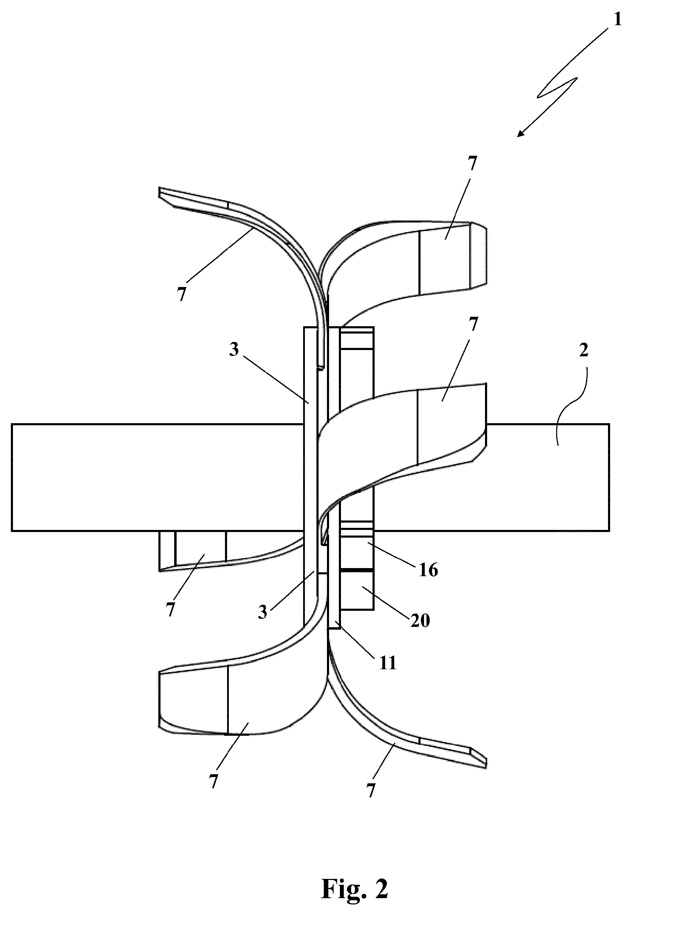

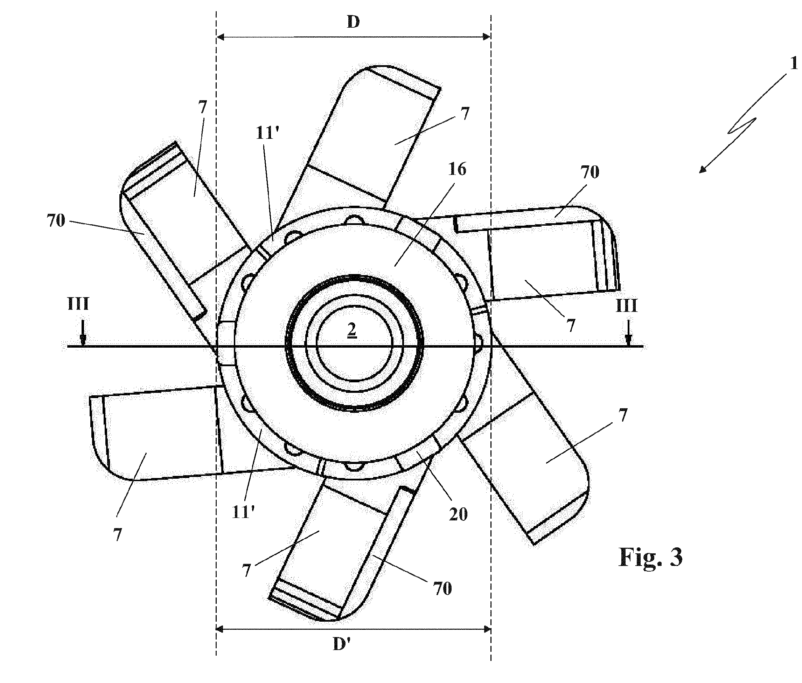

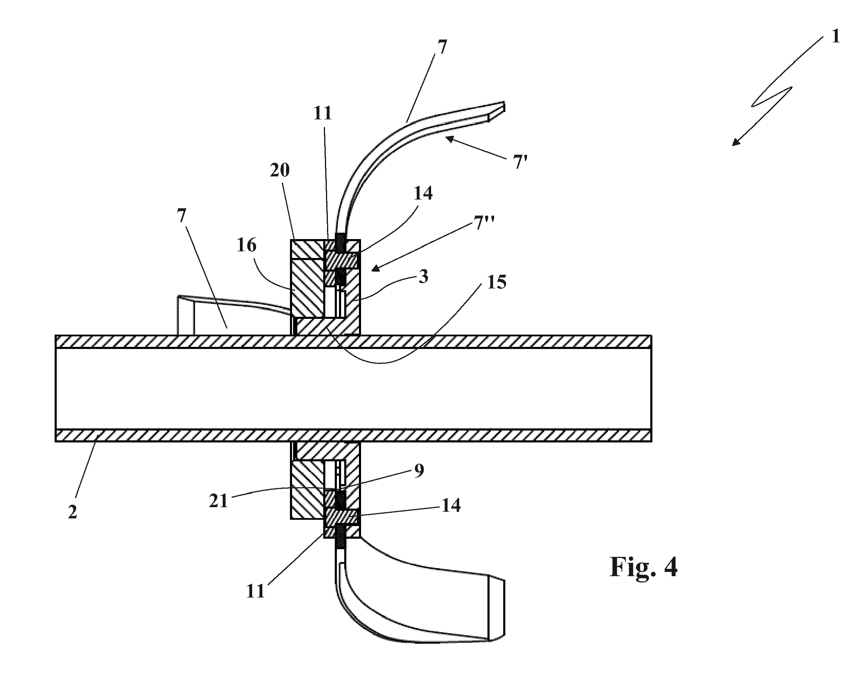

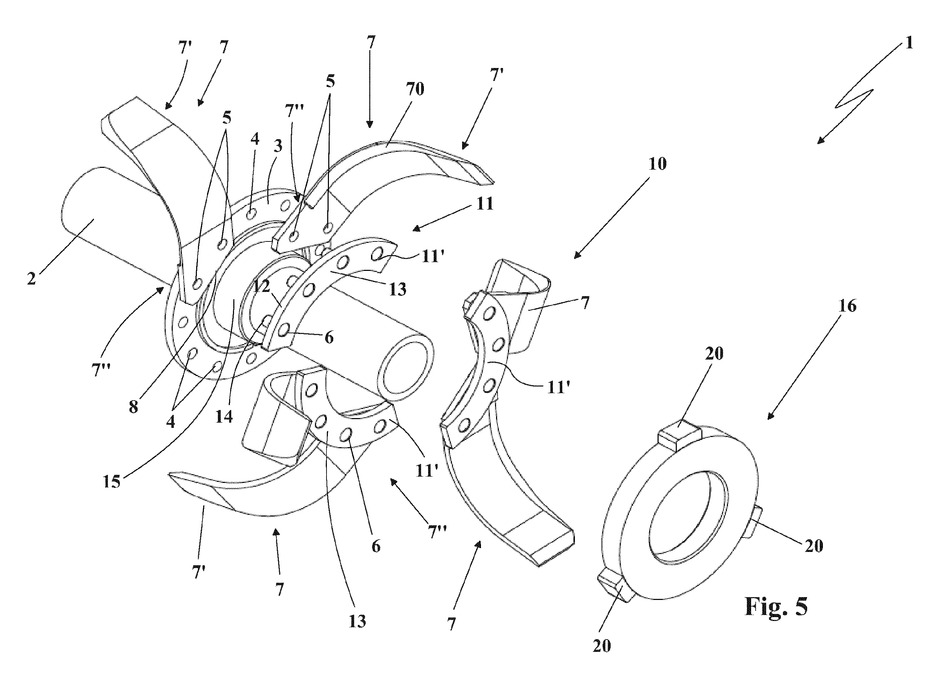

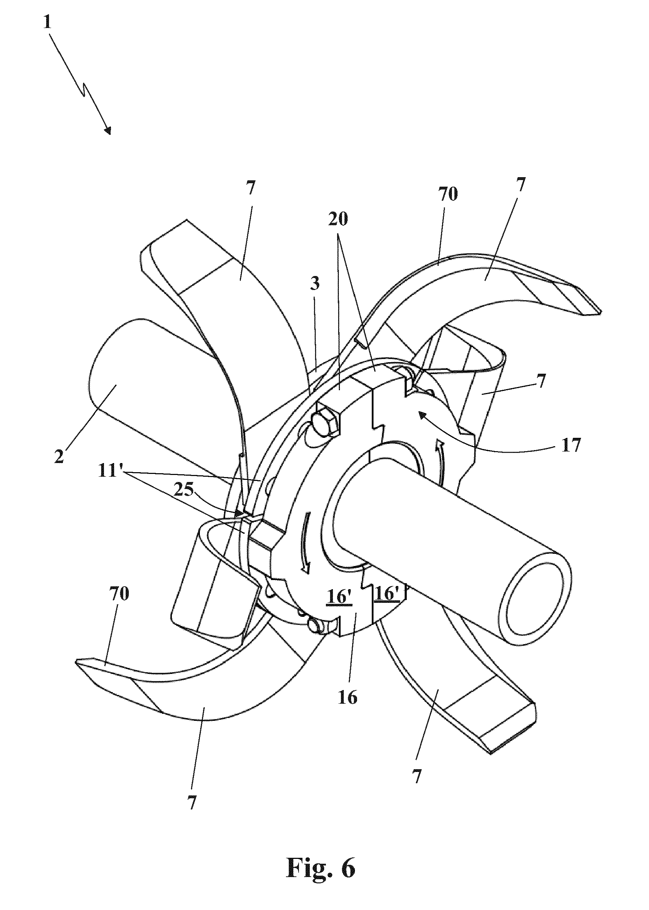

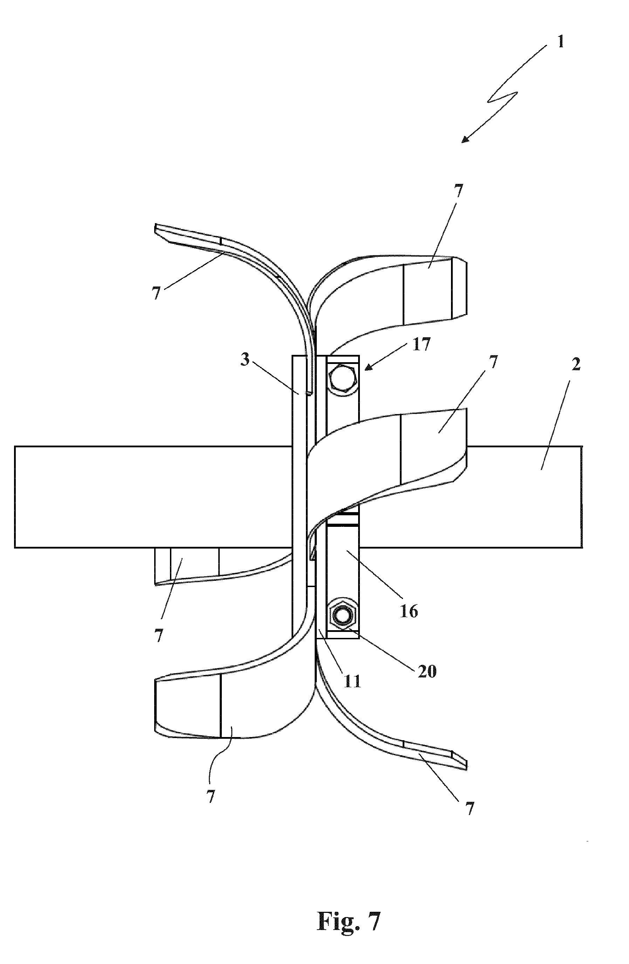

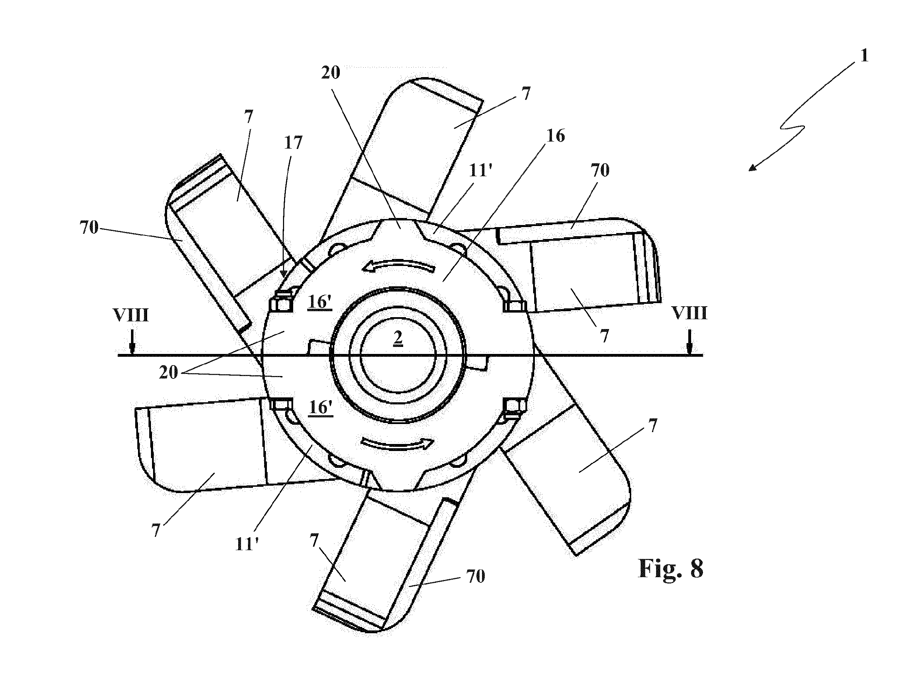

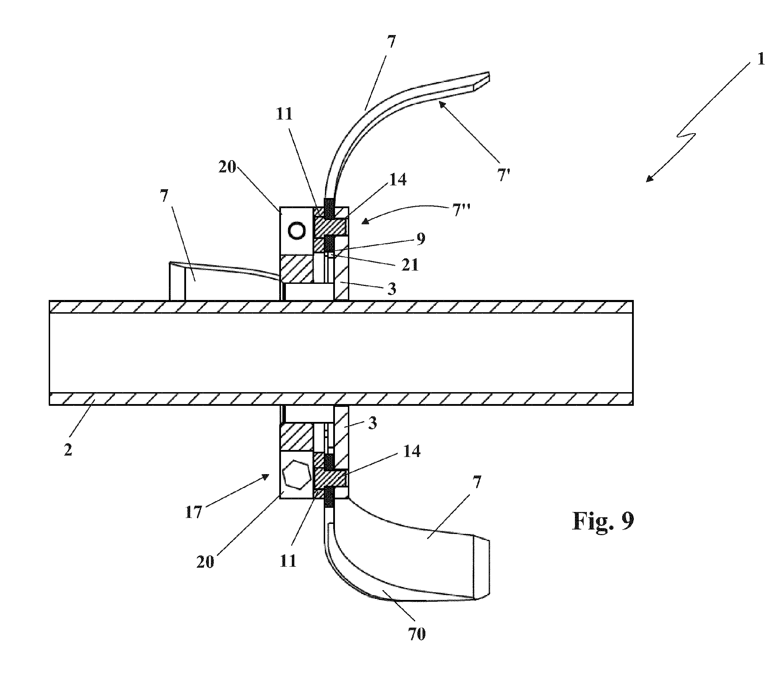

In order to prevent the pins 14 from coming out from the holes 4, 5, the removable holding means 10 according to the invention also comprise at least one bushing 15 that is provided with an external threading (not illustrated) and that is directly fixed to the shaft 2 or fixed to the latter through the fixed flange 3 in accordance with the two different embodiments illustrated in figures 6-10 and in figures 1-5, respectively.

More in detail, in accordance with the embodiment illustrated in figures 1-5, the bushing 15 is fixed to the fixed flange 3 and is preferably made in a single body with the same fixed flange 3 by making an L-shaped profile in a radial section view. The rigid connection of such a shaped body to the shaft 2 occurs through the fixing of the bushing 15 or of the fixed flange 3 to the shaft 2, in particular through welding.

Otherwise, in accordance with the embodiment illustrated in figures 6-10, the bushing 15 and the fixed flange 3 consist of two distinct elements that are mounted and fixed to the shaft 2 separately through distinct welding.

Advantageously, in accordance with this last embodiment the bushing 15 is obtained with two distinct portions 15' that are fixed on the shaft 2 alongside one another in particular through welding. Each portion 15' of the bushing is preferably arch-shaped extending by 180 degrees.

According to the invention, the removable holding means 10 moreover comprise at least one fastening bush 16 that is provided with an internal threading (not illustrated) and that is able to engage by screwing onto the external threading of the bushing 15 going into abutment on the second face 13 of the annular plate 11 to compress the hoes 7 against the fixed flange 3.

Advantageously, the fastening bush 16 can be capable of being screwed onto the bushing 15 by rotating according to a rotation direction that is opposite with respect to the rotation direction of the cutting group 1 given by the rotary driven shaft 2, so that, during the operation of the rotary hoeing machine, the fastening bush 16 is induced to screw onto the bushing 15 by the rotation of the cutting group 1, even if the hoes 7 hit an obstacle in the soil.

As already indicated for the bushing 15, also the fastening bush 16 can be made in a single body, in accordance with the embodiment of figures 1-5, or in two portions 16' that can be connected to one another in accordance with the embodiment of figures 6-10.

Advantageously, in accordance with this last embodiment the fastening bush 16 is obtained with two distinct portions 16', preferably arch-shaped with a development of 180 degrees, which are fixed alongside one another through screw means 17. The latter advantageously comprise two screws 18 that are inserted in four aligned holes 19 that are foreseen in two projecting appendages 20, arranged opposite one another on the two distinct portions 16' of the fastening bush 16 and engaged at one end by bolts 21.

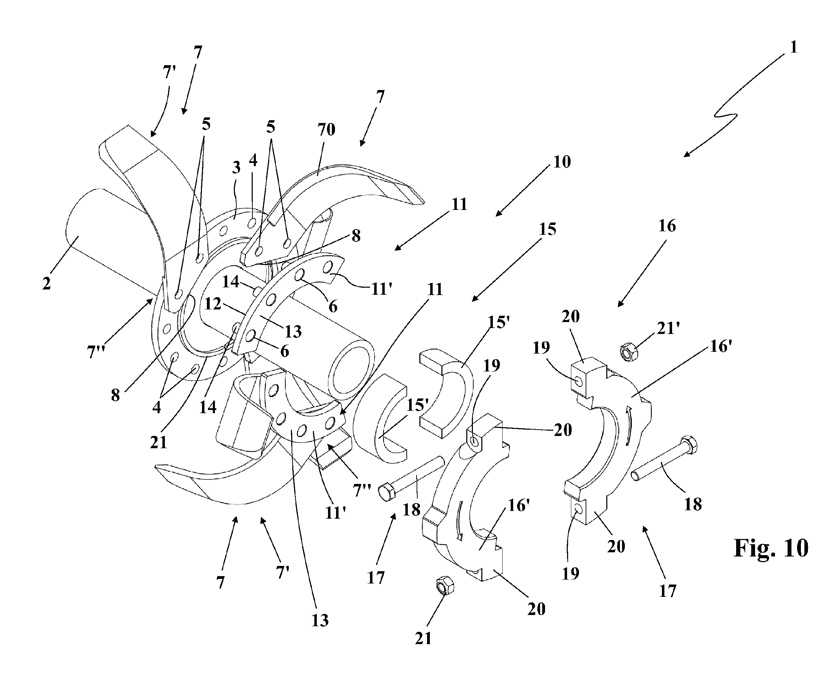

The projecting appendages 20 in addition to defining the body for inserting the screws 18 carry out the function of holding means for making the fastening bush 16 rotate by screwing it or unscrewing it on the bushing 15 (as indicated by the arrows in figure 10). For such a purpose, also the bush 16 in a single body, relative to the embodiment illustrated in figures 1-5 is perimetrically provided with appendages 20 projecting radially.

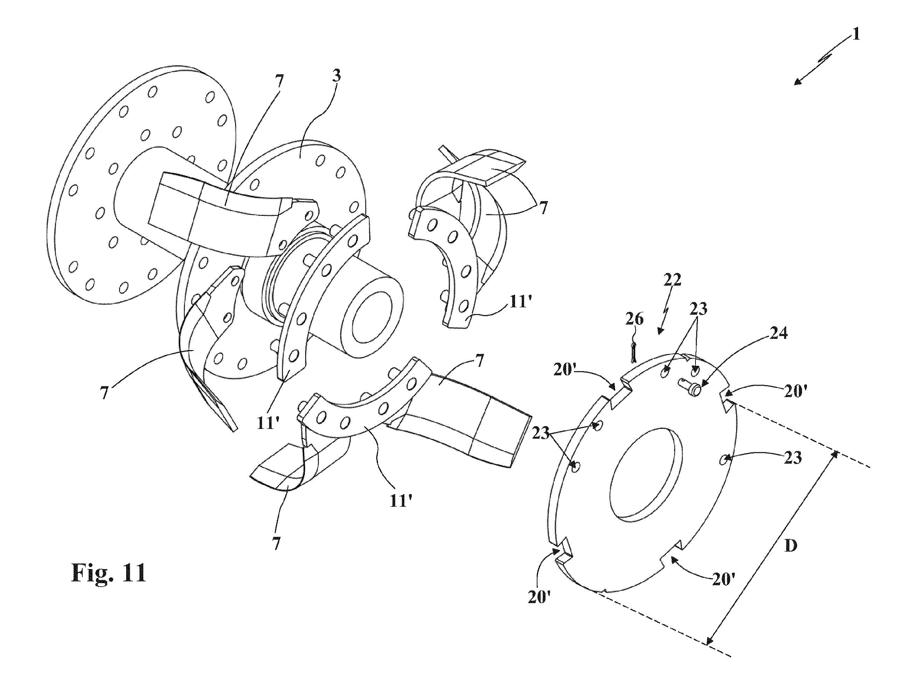

On the other hand, the bush 16 can be provided with a plurality of radially notched recesses 20', obtained spaced from one another along the perimeter of the fastening bush 16 itself, as illustrated in Figure 11.

The fact that the holding means, for making the fastening bush 16 rotate by screwing it or unscrewing it on the bushing 15, are made up of two or more of the aforementioned recesses 20' instead of projecting appendages 20, makes it possible, for the same transverse bulk D of the bush 16, to increase the contact surface, and therefore the friction force, between the bush 16 and the annular plate 11. Such a friction force opposes the rotation of the bush 16 with respect to the annular plate 11 and therefore it opposes the loosening of the bush 16.

Indeed, preferably, the bulk D of the bush 16 transverse with respect to the rotation axis, including also the possible projecting appendages 20, is kept equal or smaller than the transverse bulk D' of the annular plate 11, so as to prevent the bushing 16 itself, or rather the possible projecting appendages 20, from interfering with the hoes 7. Advantageously, the cutting group 1 comprises means 22 for locking the fastening bush 16 screwed on the bushing 15, which are suitable for preventing the fastening bush 16 from rotating with respect to the bushing 15 and, therefore, its possible unscrewing from the latter.

In accordance with a possible embodiment of the cutting group 1 not illustrated here, in the fastening bush 16, a slit is radially obtained that divides two limbs of the fastening bush 16 and such locking means 22 comprise screw means that are suitable for bringing the aforementioned limbs closer to one another, bringing them together. The locking of such screw means and the consequent movement towards one another of the limbs which delimit the slit obtained in the bush 16, ensure that the bush 16 itself is securely tightened on the threaded bushing 15.

In accordance with a different particularly advantageous embodiment of the cutting group 1 according to the present invention illustrated for example in Figure 11, if the annular plate 11 is obtained with many distinct arched portions 11' as previously specified and there is still a gap 25, between the adjacent arched portions 11' fastened to the fixed flange 3, as visible for example in Fig. 6, the locking means 22 can comprise one or more interference elements 24 and, in particular, preferably a single interference element 24 capable of being inserted in a fifth through hole 23 of a plurality of fifth through holes 23 obtained perimetrically on the fastening bush 16, which is aligned with one of the gaps 25 when the fastening bush 16 is well screwed on the threaded bushing 15 so as to prevent the fastening bush 16 itself rotate with respect to the annular plate 11 and therefore with respect to the bushing 15.

In particular the fifth through holes 23 are advantageously obtained spaced from one another along at least one arc of circumference centred on the axis of the shaft 2 when the bush 16 is screwed on the bushing 15 that is associated with the latter.

Preferably, the locking means 22 also comprise a holding element 26, which is suitable for holding the interference element 24 inserted in one of the fifth through holes 23 and in one of the gaps 25.

According to the embodiment illustrated in Figure 11, the interference element 24 consists of a prong and the holding element 26 is made up of a split pin. On the other hand, the interference element 24 and the holding element 26 can be respectively made up of a prong and a pin, or a screw and a nut, or in any case respective elements that are capable of cooperating with one another so as to achieve the purposes described above.

Advantageously, in order to transfer the force transmitted by the ground onto the hoes 7 in a more even manner on the fixed flange 3 and therefore on the shaft 2, the fixed flange 3 is provided with an annular ribbing 21 that is able to receive, in abutment, the edge of the second end 9 of the fastening portion 7" of the hoe 7.

Preferably, the profile of the annular ribbing 21 of the fixed flange 3 is counter-shaped with respect to the edge of the end 9 of the fastening portion 7" of the hoe 7. Such an annular ribbing 21 preferably has the shape of a projecting step that extends in a circular manner on the face of the fixed flange 3 facing towards the hoes 7; consequently, the latter preferably have the edge of the end 9 of the fastening portion 7" that is arch-shaped with a radius of curvature that is equal to that of the ribbing 21.

The coupling, be it by simple abutment or shape-coupling, between the annular ribbing 21 and the edge of the end 9 of the hoe 7, makes it possible to transfer the stresses over a very wide surface.

Advantageously, the fastening bush 16 extends radially until it covers the third holes 6 of the pins 14 so as to prevent the latter from coming out as a result of strong stress transmitted by the hoes and which the same pins 14 undergo during the working step of the cutting group 1.

Operatively, in order to replace one or more hoes 7 of a cutting group 1, it is sufficient to loosen the fastening bush 16, separate the annular plate 11, or rather only the corresponding portion of annular plate 11' that holds the hoes to be replaced extracting the pins 14 from the first and from the second holes 4 and 5 of the fixed flange 3 and of the hoes 7 so as to be able to separate the plates and thus free the hoes 7.

Once the hoes 7 have been replaced with other new ones or ones having a different shape so as to carry out for example another function, it is first necessary to position them with the second holes 5 aligned with the first holes 4 of the fixed flange 3, then couple the annular plate 11, or only the corresponding portion of annular plate 11', inserting its pins 14 in the first and second aligned holes 4, 5 of the fixed flange 3 and of the hoes 7.

At this stage it is necessary to hold the portions of annular plate 11' rigidly in abutment on the hoes 7 screwing the fastening bush 16 on the bushing 15.

In accordance with the embodiment of figures 6-10, the loosening of the bush 16 can be carried out upon loosening the fixing screws that keep the two portions 16' of the bush 16 joined.

The main advantage of the present invention therefore consists of the possibility of replacing the hoes 7 in a simple and rapid manner without long screwing and unscrewing operations. A further advantage lies in the possibility of applying the cutting group object of the present invention on pre-existing shafts of a hoeing machine thanks to the possibility of making the annular plate 11', the bushing 15 and the fastening bush 16 in many parts.

The finding thus conceived therefore reaches the predetermined purposes.

Of course, in its practical embodiment, it may also take up shapes and configurations that are different with respect to those illustrated above without, for this reason, departing from the scope of protection. Moreover, all the details can be replaced by technically equivalent elements and the shapes, the sizes and the materials used may be any according to the requirements.

## Claims

1. Cutting group for a rotary hoeing machine, which comprises:
- at least one fixed flange (3) able to be rigidly centrally fixed to a rotary driven shaft (2) of a rotary hoeing machine;
- one or more hoes (7), each of which can be rigidly fixed to said first fine flange (3) through removable holding means (10), and is formed from a plate equipped with a work portion (7') for treating the earth, and with a fastening portion (7") forming a single body with the work portion (7');
**characterised in that**:
said fixed flange (3) is perimetrically provided with a plurality of first through holes (4);
each said hoe (7) is provided with at least one second through hole (5), able to align with a corresponding first hole (4) of said fixed flange (3);
said removable holding means (10) comprise:
- at least one annular plate (11) having a first face (12) facing towards said hoes (7) and a second face (13) oriented in the opposite direction to the first, the first face (12) of said annular plate (11) being provided with a plurality of projecting pins (14) able to insert in said first (4) and second holes (5) aligned to fixedly connect said hoes (7) to said fixed flange (3);
- at least one bushing (15) fixed to said shaft (2) or to said fixed flange (3) and provided with external threading;
- at least one fastening bush (16) provided with internal threading and able to engage by screwing onto the external threading of said bushing (15) going into abutment on the second face (13) of said annular plate (11) to compress said hoes (7) against said fixed flange (3).

2. Cutting group for a rotary hoeing machine according to claim 1, **characterised in that** said annular plate (11) is obtained with many distinct arched portions (11') each provided with one or more pins (14).

3. Cutting group for a rotary hoeing machine according to claim 1 or 2, **characterised in that** each hoe (7) is provided with at least two second holes (5).

4. Cutting group for a rotary hoeing machine according to any one of the previous claims, **characterised in that** said fastening bush (16) is perimetrically provided with appendages (20) projecting radially to facilitate its screwing and unscrewing on said bushing (15).

5. Cutting group for a rotary hoeing machine according to any one of the previous claims, **characterised in that** said fastening bush (16) is perimetrically provided with radially notched recesses (20') so as to facilitate its screwing and unscrewing on said bushing (15).

6. Cutting group for a rotary hoeing machine according to any one of the previous claims, **characterised in that** said fastening bush (16) is obtained with two distinct portions (16') fixed alongside one another through screw means (17).

7. Cutting group for a rotary hoeing machine according to claims 4 and 6, **characterised in that** said screw means (17) comprise two screws (18) inserted in four aligned holes (19) foreseen in two said projecting appendages (20), arranged facing on said two distinct portions (16') of said fastening bush (16).

8. Cutting group for a rotary hoeing machine according to any one of the previous claims, **characterised in that** said fixed flange (3) is provided with an annular ribbing (21) able to receive the edge of the free end (9) of the fastening portion (7") of said hoe (7) in abutment.

9. Cutting group for a rotary hoeing machine according to any one of the previous claims, **characterised in that** said projecting pins (14) are fixed, in particular by compression, in third holes (6) formed in said annular plate (11), and said fastening bush (16) extends radially until it covers said third holes (6) to prevent said pins (14) from coming out from said third holes (6).

10. Cutting group for a rotary hoeing machine according to any one of the previous claims, **characterised in that** said bushing (15) is obtained with two distinct portions (15') fixed alongside one another on said shaft (2) in particular through welding.

11. Cutting group for a rotary hoeing machine according to any one of claims 1 to 9, **characterised in that** said bushing (15) is obtained in a single body with said fixed flange (3).

12. Cutting group for a rotary hoeing machine according to any one of the previous claims, **characterised in that** it comprises locking means (22) of said fastening bush (16) screwed on said bushing (15).

13. Cutting group for a rotary hoeing machine according to claims 2 and 12, **characterised in that** the arched portions (11') that are fastened to said fixed flange (3) adjacent to one another define, between them, a gap (25) and said locking means (22) comprise at least one interference element (24) capable of being inserted in one of a plurality of fifth through holes (23) obtained perimetrically on said fastening bush (16) aligned with one of said gaps (25) to prevent the rotation of said fastening bush (16) with respect to said annular plate (11).

14. Cutting group for a rotary hoeing machine according to claim 13, **characterised in that** said locking means (22) also comprise a holding element (26) suitable for holding said interference element (24) inserted in said fifth through hole (23) and in said gap (25).

15. Cutting group for a rotary hoeing machine according to claim 12, **characterised in that** said fastening bush (16) is provided with a radial slit that divides two limbs of said fastening bush (16) and said locking means (22) comprise screw means suitable for bringing said limbs closer to one another, bringing them together, to tighten said bush (16) on said bushing (15).
